# EUROPÄISCHE PATENTSCHRIFT

(11) **EP 2 906 848 B1**
(45) Veröffentlichungstag und Bekanntmachung des Hinweises auf die Patenterteilung: **09.05.2018**
(21) Anmeldenummer: 13779181.0
(22) Anmeldetag: 11.10.2013
(51) Int. Cl.: F16D 65/097

(54) **SCHEIBENBREMSE**
DISC BRAKE
FREIN À DISQUE

(30) Priorität: 15.10.2012 DE 102012109783
(43) Veröffentlichungstag der Anmeldung: 19.08.2015
(73) Patentinhaber: KNORR-BREMSE Systeme für Nutzfahrzeuge GmbH, 80809 München (DE)
(72) Erfinder: FISCHL, Tobias, 80336 München (DE)
(86) Internationale Anmeldenummer: PCT/EP2013/071242
(87) Internationale Veröffentlichungsnummer: WO 2014/060299

(56) Entgegenhaltungen:
- EP-A1- 0 703 378
- EP-A1- 1 764 527
- DE-B3-102005 045 877

## Beschreibung

Die Erfindung betrifft eine Scheibenbremse nach dem Oberbegriff des Anspruchs 1.

In der DE 10 2006 039 298 B3 ist eine Scheibenbremse geoffenbart, deren Belaghaltebügel der Vorspannung von im Bremssattel angeordneten Bremsbelägen dient, die jeweils eine an einer Belagträgerplatte befestigte Belaghaltefeder aufweisen, an denen sich der Belaghaltebügel abstützt. Durch die erzielte Vorspannung, mit der die Bremsbeläge im Bremssattel gehalten werden, werden beispielsweise Klappergeräusche verhindert, zumindest jedoch reduziert.

Prinzipiell hat sich diese bekannte Konstruktion bewährt. Jedoch gehen Forderungen dahin sowohl die Montage wie auch Demontage der Bremsbeläge, insbesondere bei einem Bremsbelagwechsel, zu vereinfachen.

Diese Forderung besteht auch gegenüber einer Scheibenbremse, wie sie in der DE 86 15 015 U1 vorgeschlagen ist, wobei der Belaghaltebügel einerseits formschlüssig am Bremssattel gehalten und andererseits mit dem Bremssattel verschraubt wird. Diese Art der Befestigung des Belaghaltebügels ist nur mit einem erheblichen Aufwand möglich, sowohl in der Vorbereitung entsprechender Maßnahmen, wie dem Einbringen einer Gewindebohrung in den Bremssattel, wie auch hinsichtlich der Montage bzw. Demontage. Hierbei wirken die beengten räumlichen Verhältnisse einer montierten Scheibenbremse bei Montagearbeiten zusätzlich beschwerlich.

In der DE 20 2008 013 446 U1 sowie der DE 10 2005 045 877 B3 ist jeweils eine Scheibenbremse thematisiert, bei der der Belaghaltebügel eine Sperrvorrichtung in Form eines Federelementes aufweist, um ein Lösen des Belaghaltebügels in Längsrichtung zu verhindern.

Die EP 0 703 378 A1 zeigt und beschreibt eine Scheibenbremse, bei der an den eine Montageöffnung des Bremssattels begrenzenden Wänden Schlitze vorgesehen sind, in die der Belaghaltebügel einschwenkt ist. Zu dessen Sicherung, d.h., um ein Ausschwenken zu verhindern, sind in den Bremssattel eingelassene Stifte vorgesehen, die in Schwenkrichtung beidseitig des Belaghaltebügels Anschläge bilden.

Die sich dadurch ergebenden zusätzlichen Kosten stehen der ständigen Forderung nach einer Kostenoptimierung entgegen.

Der Erfindung liegt die Aufgabe zugrunde, eine Scheibenbremse der gattungsgemäßen Art so weiterzuentwickeln, dass eine einfache und kostengünstige Montage bzw. Demontage von Bremsbelägen möglich ist sowie die Herstellungskosten der zur Befestigung des Belaghaltebügels erforderlichen Maßnahmen am Bremssattel zu minimieren.

Diese Aufgabe wird durch eine Scheibenbremse mit den Merkmalen des Anspruchs 1 gelöst.

Die neue Scheibenbremse bietet gegenüber einer solchen nach dem Stand der Technik erhebliche Vorteile, insbesondere hinsichtlich einer Kostenminimierung, die sich zum einen aus dem konstruktiv einfachen Aufbau der Anordnung bzw. des Belaghaltebügels sowie des Bremssattels und der damit einhergehenden preiswerten Herstellung ergibt und zum anderen aus der, gegenüber dem Stand der Technik wesentlich vereinfachten Handhabung bezüglich der Montage bzw. Demontage des Belaghaltebügels und damit der Bremsbeläge.

Die neue Scheibenbremse zeichnet sich überdies durch eine besondere Robustheit sowie durch eine zuverlässige Befestigung des Belaghaltebügels am Bremssattel aus, die auch bei größtmöglicher Beanspruchung im Fahrbetrieb des vorzugsweise Nutzfahrzeuges uneingeschränkt sicher ist.

In seiner einfachsten Ausführungsform ist der Belaghaltebügel als unkonturierter rechteckiger oder trapezförmiger Blechstreifen ausgebildet, der zur Montage hochkant gestellt, d.h., mit einer der beiden Längsseiten in Richtung der Belagfedern weisend in einen Schlitz der bremssattelseitigen Aufnahme eingesteckt und nach dessen Durchtreten durch Verdrehen um seine Längsachse in eine Position gebracht wird, in der er, bezogen auf die Belaghaltefeder, unterseitig an einem Vorsprung der Aufnahme und belastet durch den Druck der Belaghaltefeder daran anliegt.

Andererseits stützt sich der Belaghaltebügel an einem Widerlager des Bremssattels ab und zwar ebenfalls federbelastet durch die Belaghaltefeder des zugeordneten Bremsbelages.

Bevorzugt befindet sich dieses Widerlager in dem Bereich des Bremssattels, der eine Verschlussplatte zum Verschließen eines Aufnahmeraumes für Funktionsteile, wie einer Zuspanneinrichtung, aufweist.

Zur Anlage der Verschlussplatte muss der entsprechende Bereich des üblicherweise aus Gusseisen bestehenden Bremssattels spanend bearbeitet werden. Bei dieser Bearbeitung wird das Widerlager herausgebildet und zwar dadurch, dass in diesem Bereich kein Material abgetragen wird. Erkennbar lässt sich ein solcher Bremssattel einfacher herstellen als einer nach dem Stand der Technik, bei dem eine taschenförmige Einstecköffnung zum Einführen des Belaghaltebügels in diesem Bereich vorgesehen ist.

Darüber hinaus müssen weder separate Befestigungselemente, wie Splinte oder Schrauben bereitgehalten werden, noch ist eine Verformung des Belaghaltebügels zur Herstellung eines Formschlusses zwischen dem Belaghaltebügel und dem Bremssattel erforderlich.

Ohne Zuhilfenahme von Werkzeug ist sowohl die Montage wie auch die Demontage des Belaghaltebügels möglich, wobei eine Lösung des Belaghaltebügels aus seiner Arretierstellung und zum Freilegen der Bremsbeläge zerstörungsfrei möglich ist. D.h., der Belaghaltebügel ist nach einem beispielsweise erfolgten Bremsbelagwechsel wiederverwendbar, wodurch sich gleichfalls eine Kostenersparnis ergibt.

Die Fixierung des Belaghaltebügels in der Arretierstellung erfolgt ausschließlich durch den Anpressdruck der beiden Belaghaltefedern, während ein Lösen des Belaghaltebügels durch Niederdrücken und anschließendes Verdrehen des Belaghaltebügels um 90° um seine Längsachse möglich ist, in der er in Deckung mit dem Schlitz der Aufnahme gebracht ist und entnommen werden kann.

Anstelle eines Eindrehens des Belaghaltebügels in die Aufnahme besteht auch die Möglichkeit, den Belaghaltebügel seitlich in die Aufnahme einzuschieben bis er in eine nach oben, also in Federrichtung der Belaghaltefeder sich fortsetzende Kammer gelangt, deren sich gegenüberliegende Seitenwände eine Begrenzung bilden, ebenso wie die Oberseite der Kammer.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Teilausschnitt einer Scheibenbremse mit einer erfindungsgemäßen Anordnung in einer perspektivischen Ansicht
- Figur 2: einen Teilausschnitt der Scheibenbremse in einer Seitenansicht

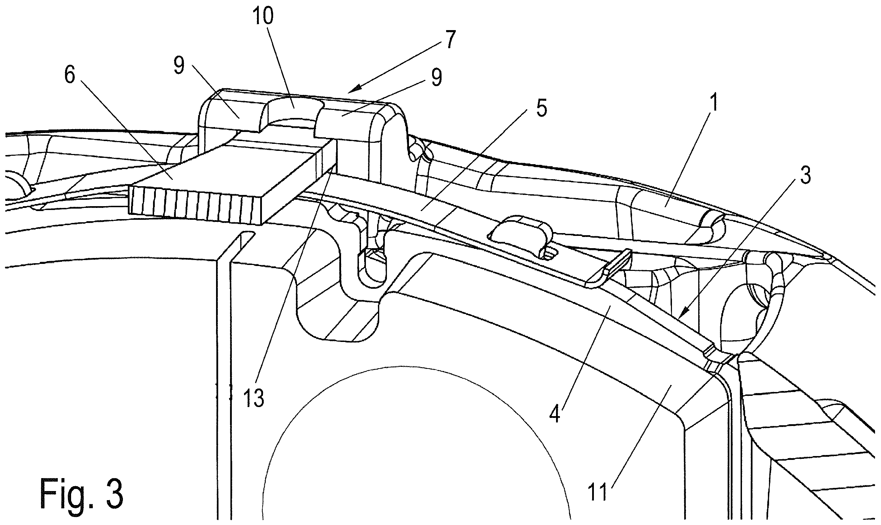

- Figur 3: einen Schnitt durch die Scheibenbremse gemäß der Linie III-III in Figur 1
- Figur 4: unterschiedliche Montagestellungen eines Belaghaltebügels, entsprechend der Ansicht in Figur 3
- Figur 5: ein weiteres Ausführungsbeispiel einer erfindungsgemäßen Anordnung in einer Schnittdarstellung entsprechend der Linie III-III in Figur 1.

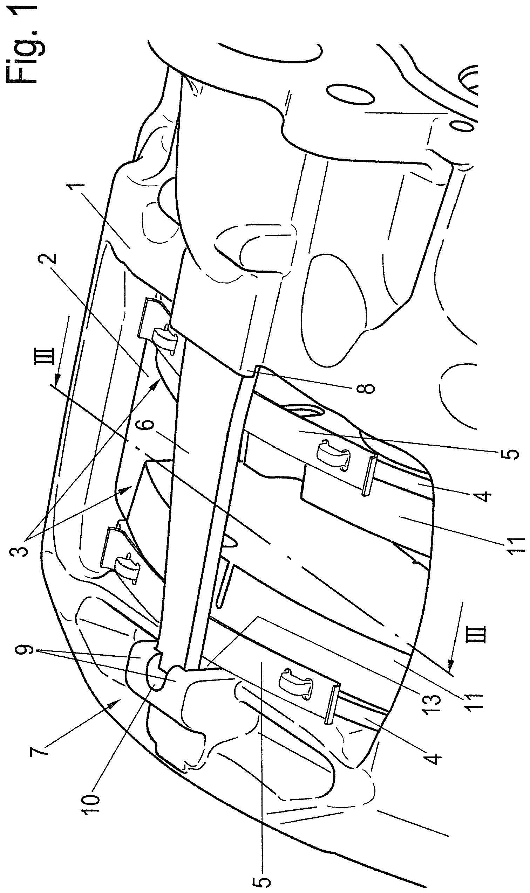

In der Figur 1 ist die Anordnung eines Belaghaltebügels 6 am Bremssattel 1 einer Schiebesattel-Scheibenbremse dargestellt, wobei im Bremssattel 1 zwei beidseitig an eine nicht gezeigte Bremsscheibe anpressbare Bremsbeläge 3 angeordnet sind.

Jeder dieser Bremsbeläge 3 besteht aus einer Belagträgerplatte 4 sowie einem darauf befestigten Reibbelag 11. An der Belagträgerplatte 4 ist einer Montageöffnung 2 des Bremssattels 1 zugewandt eine Belaghaltefeder 5 befestigt, an denen der die Montageöffnung 2 überspannende Belaghaltebügel 6 anliegt.

Zur Arretierung des Belaghaltebügels 6 stützt sich dieser federbelastet durch die Belaghaltefedern 5 mit einem Endbereich in einer Aufnahme 7 formschlüssig und mit dem anderen Endbereich an einem Widerlager 8 ab, wobei die Aufnahme 7 und das Widerlager 8 an den aus Gusseisen bestehenden Bremssattel 1 angeformt sind.

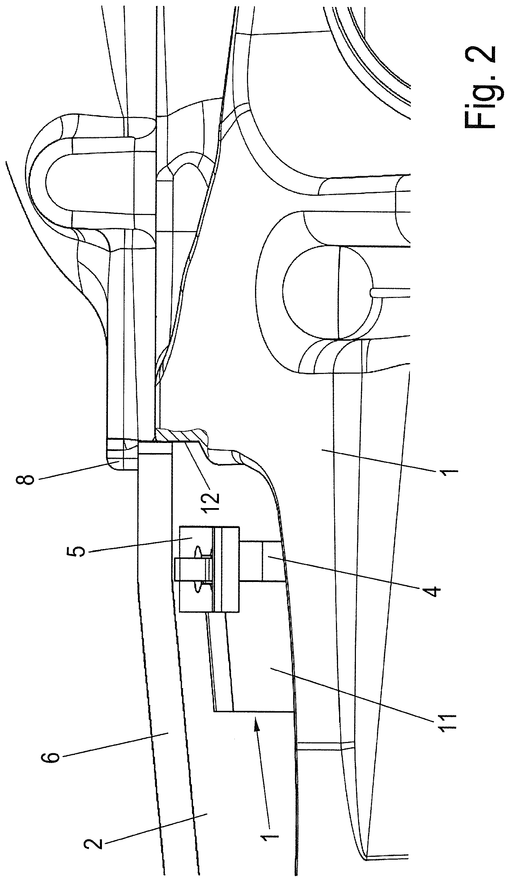

Der Belaghaltebügel 6 besteht aus einem in seiner Grundfläche trapezförmigen Blechstreifen und liegt mit seiner breiteren Seite an der Unterseite des Widerlagers 8 an, wie besonders deutlich in der Figur 2 zu erkennen ist.

Dieses Widerlager 8 wird bei der spanenden Herstellung einer Anlagefläche 12 herausgebildet, die als Anlage für einen nicht dargestellten Verschlussdeckel dient, mit dem ein Aufnahmeraum des Bremssattels 1 für Funktionsteile verschlossen wird. Erkennbar ragt das Widerlager 8 stegartig in den Bereich der Montageöffnung 2.

Der gegenüberliegende schmalere Endbereich liegt in einer Kammer 13 der Aufnahme 7 ein, die im Übrigen in dem dem reaktionsseitigen Bremsbelag 3 zugeordneten Bereich des Bremssattels 1 angeordnet ist, während das Widerlager 8 gegenüberliegend, also dem zuspannseitigen Bremsbelag 3 am Bremssattel 1 positioniert ist.

Oberseitig ist die Kammer 13 durch Vorsprünge 9 begrenzt, zwischen denen ein Einführschlitz 10 vorgesehen ist, der nach oben hin, also in die dem Bremsbelag 3 abgewandte Richtung offen ist.

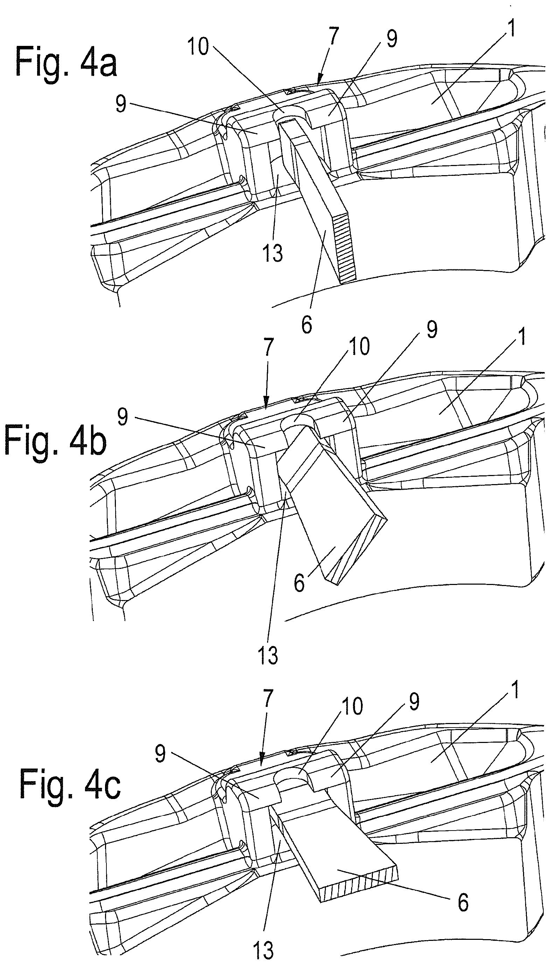

Die Montage des Belaghaltebügels 6 bei dieser Ausführungsvariante ist in einzelnen Schritten in der Figur 4 a) bis c) dargestellt. Darin ist zu erkennen, dass der Belaghaltebügel 6 mit einer der beiden Längsseiten zunächst hochkant durch den Einführschlitz 10 in die Kammer 13 eingesteckt, danach um 90° um seine Längsachse gedreht und schließlich durch die Belaghaltefeder 5 an die Unterseite der Vorsprünge 9 gedrückt wird.

Die Halterung des Belaghaltebügels 6 an dem Widerlager 8 erfolgt ausschließlich in Federrichtung der Belaghaltefeder 5, demnach nach oben, während seitlich bei diesem Ausführungsbeispiel keine Bewegungsbegrenzung des Belaghaltebügels 6 vorgesehen ist.

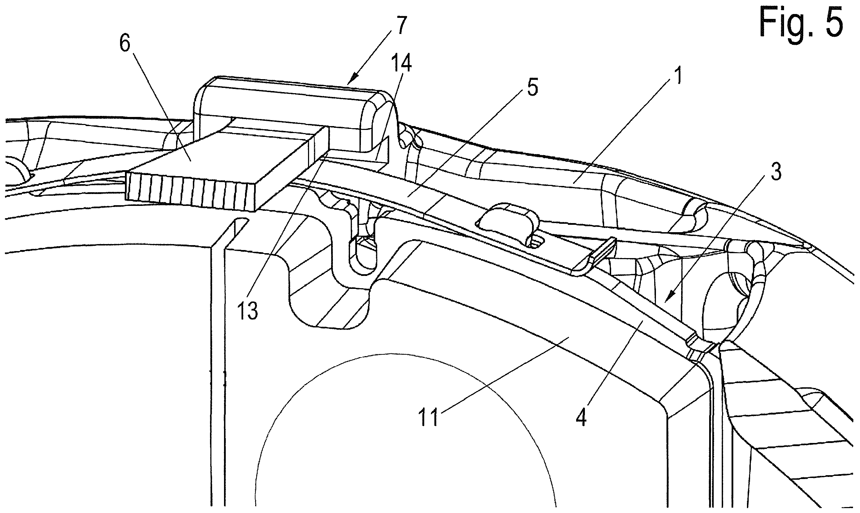

Eine weitere Ausführungsvariante der erfindungsgemäßen Anordnung ist in der Figur 5 erkennbar. Hierbei weist die Aufnahme 7 statt eines oberen Einführschlitzes 10 einen Seitenschlitz 14 auf, der in die Kammer 13 mündet, wobei bei einer Montage der Belaghaltebügel 6 seitlich durch den Seitenschlitz 14 in die Kammer 13 eingeschoben und anschließend durch die Federkraft der Belaghaltefeder 5 an die obere Begrenzung der Kammer 13 gedrückt wird. Durch Seitenwandungen der Kammer 13 ist die Arretierung des Belaghaltebügels 6 in jeder Richtung gewährleistet.

### Bezugszeichenliste

1 Bremssattel
2 Montageöffnung
3 Bremsbelag
4 Belagträgerplatte
5 Belaghaltefeder
6 Belaghaltebügel
7 Aufnahme
8 Widerlager
9 Vorsprung
10 Einführschlitz
11 Reibbelag
12 Anlagefläche
13 Kammer
14 Seitenschlitz

## Patentansprüche

1. Scheibenbremse, mit einem Bremssattel (1), in dem zwei beidseitig an eine Bremsscheibe anpressbare, jeweils eine Belagträgerplatte (4) und einen daran befestigten Reibbelag (11) aufweisende Bremsbeläge (3) angeordnet sind, die an den Belagträgerplatten (4) befestigte Belaghaltefedern (5) aufweisen, an denen der am Bremssattel (1) gehaltene, eine Montageöffnung (2) überspannende Belaghaltebügel (6) anliegt, **dadurch gekennzeichnet, dass** sich der Belaghaltebügel (6) ausschließlich federbelastet durch die Belaghaltefedern (5) mit einem Endbereich in einer zur Montageöffnung (2) hin offenen Kammer (13) einer Aufnahme (7) formschlüssig und mit dem anderen Endbereich an einem Widerlager (8) des Bremssattels (1) abstützt, wobei in die Kammer (13) zum Einführen des Belaghaltebügels (6) ein Schlitz mündet.

2. Scheibenbremse nach Anspruch 1, **dadurch gekennzeichnet, dass** die Kammer (13) auf ihrer dem zugeordneten Bremsbelag gegenüberliegenden Seite einen Einführschlitz (10) aufweist, an den sich beidseitig jeweils Vorsprünge (9) anschließen, an denen der Belaghaltebügel (6) federbelastet anliegt.

3. Scheibenbremse nach Anspruch 1, **dadurch gekennzeichnet, dass** in die Kammer (13) ein Seitenschlitz (14) mündet zur Einführung des Belaghaltebügels (6).

4. Scheibenbremse nach Anspruch 3, **dadurch gekennzeichnet, dass** sich die Kammer (13) bis in einen Bereich oberhalb des Seitenschlitzes (14) erstreckt.

5. Scheibenbremse nach einem der vorhergehenden Ansprüche, **dadurch gekennzeichnet, dass** das Widerlager (8) stegartig in den Bereich der Montageöffnung (2) ragt.

6. Scheibenbremse nach einem der vorhergehenden Ansprüche, **dadurch gekennzeichnet, dass** das Widerlager (8) durch spangebende Herstellung einer Anlagefläche (12) für eine Verschlussplatte gebildet ist.

7. Scheibenbremse nach einem der vorhergehenden Ansprüche, **dadurch gekennzeichnet, dass** der Belaghaltebügel (6) als im Grundriss unkonturiertes rechteckiges oder trapezförmiges Blechteil ausgebildet ist.

8. Scheibenbremse nach einem der vorhergehenden Ansprüche, **dadurch gekennzeichnet, dass** die Aufnahme (7) in dem einem reaktionsseitigen Bremsbelag (3) zugeordneten Bereich des Bremssattels (1) angeordnet ist.

## Claims

1. Disc brake, comprising a brake calliper (1), in which are arranged two brake pads (3), which can be pressed against a brake disc on both sides, each of which comprises a backing plate (4) and a friction lining (11) attached thereto and which are provided with anti-rattle springs (5), which are mounted on the backing plates (4) and against which the pad retaining bracket (6) held on the brake calliper (1) and spanning an assembly opening (2) bears, **characterised in that** the pad retaining bracket (6) is with one end region, exclusively springloaded by the anti-rattle springs (5), positively supported in a chamber (13) - open towards the assembly opening (2) - of a receptacle (7) and with the other end region on an abutment (8) of the brake calliper (1), a slot terminating into the chamber (13) for the insertion of the pad retaining bracket (6).

2. Disc brake according to claim 1, **characterised in that** the chamber (13) has on the side opposite the associated brake pad an insertion slot (10), both sides of which are adjoined by projections (9), against which the pad retaining bracket (6) bears under spring loading.

3. Disc brake according to claim 1, **characterised in that** a lateral slot (14) terminates into the chamber (13) for the insertion of the pad retaining bracket (6).

4. Disc brake according to claim 3, **characterised in that** the chamber (13) extends into a region above the lateral slot (14).

5. Disc brake according to any of the preceding claims, **characterised in that** the abutment (8) projects into the region of the assembly opening (2) in the manner of a web.

6. Disc brake according to any of the preceding claims, **characterised in that** the abutment (8) is formed by the swarf-producing production of a contact surface (12) for a closing plate.

7. Disc brake according to any of the preceding claims, **characterised in that** the pad retaining bracket (6) is designed as a rectangular or trapezoidal sheet metal part with an uncontoured outline.

8. Disc brake according to any of the preceding claims, **characterised in that** the receptacle (7) is located in the region of the brake calliper (1) which is assigned to a reaction-side brake pad (3).

## Revendications

1. Frein à disque, comprenant un étrier (1) de frein, dans lequel sont montées deux garnitures (3) de frein, qui peuvent être pressées des deux côtés sur un disque de frein, qui ont chacune une plaque (4) de porte-garniture et une garniture (11) de friction, qui y est fixée, et qui ont des ressorts (5) de maintien de garniture fixés aux plaques(4) de porte-garniture, ressorts auxquels s'applique l'archet (6) de maintien de garniture, maintenu sur l'étrier (1) de frein et empiétant sur une ouverture (2) de montage, **caractérisé en ce que** l'archet (6) de maintien de garniture s'appuie, à complémentarité de forme, exclusivement en étant soumis à l'action des ressorts (5) de maintien de garniture par une partie d'extrémité dans une chambre (13), ouverte vers l'ouverture (2) de montage, d'un logement (7) et, par l'autre partie d'extrémité, sur une butée (8) de l'étrier (1) de frein, une fente débouchant dans la chambre (13), pour l'introduction de l'archet (6) de maintien de la garniture.

2. Frein à disque suivant la revendication 1, **caractérisé en ce que** la chambre (13) a, du côté opposé à sa garniture de frein associée, une fente (10) d'introduction à laquelle se raccordent, des deux côtés respectivement, des saillies (9) auxquelles l'archet (6) de maintien de garniture s'applique, en étant soumis à l'action de ressorts.

3. Frein à disque suivant la revendication 1, **caractérisé en ce que**, dans la chambre (13), débouche une fente (14) latérale pour l'introduction de l'archet (6) de maintien de la garniture.

4. Frein à disque suivant la revendication 3, **caractérisé en ce que** la chambre (13) s'étend jusque dans une région au dessus de la fente (14) latérale.

5. Frein à disque suivant l'une des revendications précédentes, **caractérisé en ce que** la butée (8) pénètre, à la manière d'une barrette, dans la région de l'ouverture (2) de montage.

6. Frein à disque suivant l'une des revendications précédentes, **caractérisé en ce que** la butée (8) est formée par fabrication, avec enlèvement de copeaux, d'une surface (12) d'application d'une plaque de fermeture.

7. Frein à disque suivant l'une des revendications précédentes, **caractérisé en ce que** l'archet (6) de maintien de la garniture est constitué sous la forme d'une pièce de tôle, rectangulaire ou trapézoïdale, sans contour en projection sur un plan horizontal.

8. Frein à disque suivant l'une des revendications précédentes, **caractérisé en ce que** le logement (7) est disposé dans la région de l'étrier (1) de frein, associé à une garniture (3) de frein du côté de la réaction.
